Europäisches Patentamt

(19) European Patent Office

Office européen des brevets

(11) Veröffentlichungsnummer: **0 072 901**
A1

## (12) EUROPÄISCHE PATENTANMELDUNG

(21) Anmeldenummer: 82105569.6

(22) Anmeldetag: 24.06.82

(51) Int. Cl.³: **C 21 D 1/42**
H 05 B 6/02
//C21D9/00

(30) Priorität: 21.08.81 US 294932

(43) Veröffentlichungstag der Anmeldung:
02.03.83 Patentblatt 83/9

(84) Benannte Vertragsstaaten:
AT BE CH DE FR GB IT LI LU NL SE

(71) Anmelder: PARK-OHIO INDUSTRIES, INC.
20600 Chagrin Boulevard
Shaker Heights Ohio 44122(US)

(72) Erfinder: Lewis, John Charles
83 Grant Boulevard
Dundas, Ontario, Canada L9H 4L9(CA)

(74) Vertreter: Vollbach, Hans, Dipl.-Ing. et al,
Patentanwälte Dipl.-Ing. Buschhoff Dipl.Ing Hennicke
Dipl.-Ing. Vollbach Kaiser-Wilhelm-Ring 24
D-5000 Köln 1(DE)

(54) Verfahren und Einrichtung zum gleichmässigen induktiven Erwärmen länglicher Werkstücke.

(57) Die Erfindung betrifft ein Verfahren zum gleichmäßigen Erwärmen länglicher Werkstücke, (A) die einen sich über den größten Teil ihrer Länge erstreckenden Längenabschnitt mit gleichförmigem Querschnitt (10) und mindestens einen Längenabschnitt mit demgegenüber größerem Oerschnitt (12,14) aufweisen. Die Erwärmung erfolgt mit Hilfe eines mehrwindigen Induktors (30), der an einem beweglichen Induktorträger (54) od.dgl. koaxial zu einer Arbeitsstrecke (W) angeordnet ist, auf der sich die zu erwärmenden Werkstücke (A) bewegen. Bei induktiver Kopplung des Induktors (30) mit dem dickeren Längenabschnitt (12,14) des Werkstücks wird der Induktor gleichsinnig zu dem Werkstück (A) bewegt, so daß die effektive Erwärmungsdauer des dickeren Längenabschnitts (12,14) des Werkstücks (A) erhöht und damit dieser Längenabschnitt auf die gleiche Temperatur erwärmt wird wie der dünnere Längenabschnitt (10) des Werkstücks (A). Ferner betrifft die Erfindung eine Einrichtung zur Durchführung des Verfahrens, die einen order auch mehrere auf einem Induktorträger (54) angeordnete Induktoren (30) aufweist, die in Transportrichtung der Werkstücke (A) über eine Teilstrecke beweglich und anschließend in die Ausgangsposition zurückstellbar sind.

FIG. 2

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

— 1 —

0072901

Aktenz.:

Reg.-Nr.

Pr 420 EU
bitte angeben

KÖLN, den 17.5.1982
vo/kr

Anm.:   Park-Ohio Industries, Inc.,
        20600 Chagrin Boulevard,
        Shaker Heights, Ohio 44122 (U.S.A.)

Titel:  Verfahren und Einrichtung zum gleichmäßigen
        induktiven Erwärmen länglicher Werkstücke

Die Erfindung betrifft ein Verfahren zum gleichmäßigen induktiven Erwärmen eines länglichen Werkstücks, wie insbesonderer einer Pumpenstange u.dgl., welches einen sich, vorzugsweise über den Hauptteil seiner Länge erstreckenden dünneren Längenabschnitt mit im wesentlichen gleichmäßigem Querschnitt und mindestens einen Längenabschnitt mit demgegenüber dickerem Querschnitt aufweist, wobei das Werkstück und ein mit ihm induktiv gekoppelter, das Werkstück im jeweiligen Kopplungsbereich umschließender mehrwindiger Induktor über eine in Werkstück-Längsrichtung verlaufende Arbeitsstrecke mit vorbestimmter Geschwindigkeit relativ zueinander bewegt werden. Ferner ist die Erfindung auf eine zweckdienliche Einrichtung zur Durchführung des erfindungsgemäßen Verfahrens gerichtet.

Die Erfindung ist insbesondere für das Erwärmen von Pumpenstangen geeignet, die bei Erdölbohrungen u.dgl. Verwendung finden. Darüber hinaus ist die Erfindung aber auch für das induktive Erwärmen anderer länglicher Werkstücke verschiedener Formen und Ausbildungen verwendbar, die auf ihrer Länge einen oder auch mehrere Querschnittsverdickungen aufweisen.

Pumpenstangen u.dgl. werden in der Erdölindustrie als Verbindungsgestänge zwischen einer im Ölbohrloch befindlichen Pumpe und einer an der Tagesoberfläche angeordneten Hub- oder Pumpvorrichtung verwendet. Die Pumpenstangen weisen eine verhältnismäßig große Länge auf, die im allgemeinen in der Größenordnung von 760 bis 915 cm liegt. Die Pumpenstange hat auf ihrem Hauptlängenbereich einen gleichmäßigen Querschnitt und weist in Nähe ihrer beiden Enden eine Querschnittsverdickung auf. Diese Querschnittsverdickungen dienen der endseitigen Verbindung gleichartiger Pumpenstangen. Obwohl die gebräuchlichen Pumpenstangen im einzelnen von unterschiedlicher Ausgestaltung sind, weisen jedoch praktisch alle Pumpenstangen die vorstehend genannten Grundmerkmale auf.

Bei der Herstellung werden die Pumpenstangen auf eine vorbestimmte Temperatur erwärmt und dann durch eine elektrostatische Sprühkammer hindurchgeführt, in der sie mit einem Farbüberzug oder einer Beschichtung aus einem kunststoffartigen Material versehen werden. Da die Stangen bei diesem Arbeitsvorgang nur oberflächlich erwärmt zu werden brauchen, wird das Erwärmen bevorzugt auf induktivem Wege durchgeführt. Da aber die Pumpenstangen auf ihrer gesamten Länge keinen gleichmäßigen, konstanten Querschnitt aufweisen, besteht die Notwendigkeit, die unterschiedlichen Erwärmungstemperaturen, die sich im Bereich der Stangenenden an den hier vorhanden Verdickungen einstellen, in irgendeiner Form auszugleichen. Ein ungleichmäßiges Erwärmen der Pumpenstangen über ihre Gesamtlänge führt dazu, daß die nachträglich aufgebrachte Farb- oder Kunststoffbeschichtung von ungleichmäßiger Konsistenz, Dicke u.dgl. ist, und zwar insbesondere zwischen dem dünneren Hauptlängenbereich und den endseitigen Stangenverdickungen.

Um die vorgenannten ungleichmäßigen Erwärmungen der Pumpenstangen zu verhindern, sind in der Vergangenheit verschiedenartige Maßnahmen vorgeschlagen, entwickelt und getestet worden. Diese Maßnahmen schließen unter anderem die Regelung der Induktorspannung, die Verwendung von Induktoren unterschiedlicher Formen sowie die Verwendung von ein- und abschaltbaren Verzögerungs-Zeitgliedern u.dgl. ein. Mit keiner dieser Maßnahmen konnte aber das Problem der gleichmäßigen Erwärmung der Pumpenstangen oder anderer länglicher Werkstücke, die auf ihrer Länge mindestens eine Querschnittsverdickung aufweisen, zufriedenstellend gelöst werden.

Es ist daher Aufgabe der Erfindung, ein Verfahren und eine Einrichtung zu schaffen, mit dem bzw. der längliche Werkstücke, wie insbesondere Pumpenstangen u.dgl., die auf ihrer Länge mindestens eine Querschnittsverdickung aufweisen, in betrieblich einfacher und zuverlässiger Weise gleichmäßig erwärmt werden können. Dabei soll vorzugsweise auch die Möglichkeit gegeben sein, die für die Werkstückerwärmung und die Arbeitsgeschwindigkeit bestimmenden Betriebsparameter in Anpassung an die gewünschten Ergebnisse einstellen zu können.

Die vorgenannte Aufgabe wird mit dem erfindungsgemäßen Verfahren dadurch gelöst, daß die Relativgeschwindigkeit zwischen dem Werkstück und dem Induktor bei magnetischer Kopplung desselben mit dem dickeren Längenabschnitt des Werkstücks gegenüber der Relativgeschwindigkeit, die bei magnetischer Kopplung des Induktors mit dem dünneren Längenabschnitt des Werkstücks vorliegt, so weit vermindert wird, daß der dickere Längenabschnitt bei erhöhter effektiver Erwärmungsdauer im wesentlichen auf dieselbe Temperatur erwärmt wird wie der dünnere Längenabschnitt des Werkstücks.

Mit dieser betrieblich einfachen und zuverlässigen Verfahrensweise gelingt es, längliche Werkstücke, die auf ihrer Länge eine oder auch mehrere Querschnittsverdickungen aufweisen, innerhalb verhältnismäßig enger Toleranzen gleichmäßig zu erwärmen, ohne daß verwickelte Steuerungen u.dgl.
benötigt werden. Die gleichmäßige Erwärmung beruht auf den
unterschiedlichen effektiven Erwärmungszeiten für die im
Querschnitt unterschiedlichen Längenabschnitte des Werkstücks, wobei diese unterschiedlichen Erwärmungszeiten
durch Änderung der Relativgeschwindigkeit zwischen Induktor und Werkstück bewirkt werden. Für das Verfahren lassen sich einfache Induktorspulen verwenden. Das Verfahren
läßt sich mit besonderem Vorteil so durchführen, daß während der induktiven Kopplung des Induktors mit einem dikkeren Längenabschnitt des Werkstücks die Relativgeschwindigkeit zwischen Werkstück und Induktor für einen vorbestimmten Zeitintervall zumindest angenähert aufgehoben
wird, so daß der dickere Längenabschnitt über eine längere Zeitspanne hinweg der Wirkung des Induktors unterworfen ist. Die Erwärmung der Werkstücke läßt sich in
vorteilhafter Weise im kontinuierlichen Durchlaufbetrieb
durchführen, und zwar vorzugsweise derart, daß während
der Erwärmung des größeren und dünneren Längenabschnitts
das Werkstück mit einer vorbestimmten Geschwindigkeit
über die Arbeitsstrecke zu dem Induktor und durch diesen
hindurch bewegt wird. Die Verringerung der Relativgeschwindigkeit zwischen Werkstück und Induktor beim Erwärmen des dickeren Längenabschnitts des Werkstücks erfolgt
dann zweckmäßig in der Weise, daß während der magnetischen
Kopplung des Induktors mit dem dickeren Längenabschnitt
der Induktor gleichsinnig zu dem Werkstück über die Arbeitsstrecke bewegt wird. Bei dieser Arbeitsweise läßt
sich das gleichmäßige Erwärmen des Werkstücks bei kontinuierlicher und konstanter Laufgeschwindigkeit des Werkstücks durchführen. Lediglich dann, wenn der dickere Längenabschnitt des Werkstücks sich in magnetischer Kopplung
mit dem Induktor befindet, wird dieser über eine vorgegebene Teilstrecke gleichsinnig zu dem Werkstück bewegt und
anschließend nach einem vorbestimmten Zeitintervall in
die Ausgangsstellung zurückgeführt. Die Rückstellbewegung

0072901

des Induktors in die Ausgangsstellung kann dabei mit einer
Geschwindigkeit durchgeführt werden, die von der Geschwindigkeit abweicht, mit der der Induktor gleichsinnig mit
dem Werkstück bewegt wird.

Das erfindungsgemäße Verfahren läßt sich ohne besonderen
Aufwand automatisieren. Dabei empfiehlt es sich, eine
Tastvorrichtung od.dgl. zu verwenden, welche den dickeren
Längenabschnitt des Werkstücks vor dem Einlauf in den Induktor abtastet und die dann nach einer vorbestimmten
Zeitverzögerung nach der Abtastung den Mitlauf des Induktors auslöst.

Wie erwähnt, wird das erfindungsgemäße Verfahren bevorzugt
so durchgeführt, daß das Werkstück mit kontinuierlicher
Geschwindigkeit über die Arbeitsstrecke bewegt wird. Dabei
kann auch der Induktor bei seiner induktiven Kopplung mit
den im Querschnitt unterschiedlichen Längenbereichen des
Werkstücks mit derselben vorgegebenen elektrischen Leistung betrieben werden.

Für die Durchführung des erfindungsgemäßen Verfahrens läßt
sich mit Vorteil eine Einrichtung verwenden, die mit einer
Induktorvorrichtung, die mindestens eine mehrwindige Induktorspule aufweist, durch die das Werkstück hindurchführbar ist, und mit einer der Induktorvorrichtung zugeordneten Stromquelle versehen ist. Erfindungsgemäß ist dabei
eine die Werkstücke durch die Induktorspule hindurchführende und über die Arbeitsstrecke befördernde Werkstück-
Transportvorrichtung, ferner eine die Induktorvorrichtung
in Richtung der Arbeitsstrecke bewegende Verschiebevorrichtung od.dgl. und eine Tastvorrichtung vorgesehen, die
ein die Verschiebevorrichtung steuerndes Signal liefert,
wenn ein dickerer Werkstückabschnitt eine Tastposition in
Nähe des Eingangsbereichs der Induktorvorrichtung erreicht. Vorzugsweise ist dabei eine Zeitverzögerungsvorrichtung vorgesehen, welche die Verschiebevorrichtung bei Signalgabe der Tastvorrichtung zeitverzögert einschaltet.
Die Verschiebevorrichtung, die zweckmäßig aus einem Zylinderantrieb besteht, wird vorzugsweise so ausgebildet, daß
sie auf unterschiedliche Vorschub- und Rückstellgeschwindigkeiten des Induktors einstellbar ist, wobei vorteilhafterweise die Anordnung so getroffen wird, daß mit einer
Langsam- und Schnellrückstellung des Induktors gearbeitet
werden kann. Besonders vorteilhaft ist eine Anordnung, bei
der mindestens ein Induktor an einem nach Art eines Schlittens oder Laufwagens ausgebildeten Induktorträger angeordnet ist, der mittels der Verschiebevorrichtung in Transportrichtung des Werkstücks und in Gegenrichtung beweglich
ist. An dem Induktorträger können auch mehrere Induktoren
in Parallellage zueinander angeordnet sein, so daß sich
gleichzeitig mehrere gleichartige Werkstücke erwärmen lassen.

Weitere wesentliche Merkmale der erfindungsgemäßen Einrichtung und des erfindungsgemäßen Verfahrens sind in den einzelnen Ansprüchen angegeben und werden nachfolgend im Zusammenhang mit dem in der Zeichnung dargestellten bevorzugten Ausführungsbeispiel der Erfindung näher erläutert. In
der Zeichnung zeigen:

Fig. 1  in Seitenansicht eine Pumpenstange, die nach
dem erfindungsgemäßen Verfahren gleichmäßig
erwärmt werden soll;

Fig. 2  schematisch in Seitenansicht eine zur Durchführung des erfindungsgemäßen Verfahrens bestimmte Einrichtung nach der Erfindung;

Fig. 3  bis 6 die Einrichtung nach Fig. 2 jeweils
in einer Teil-Seitenansicht in den verschiedenen Arbeitspositionen während des Betriebs;

Fig. 7  schematisch in Draufsicht eine geänderte Ausführungsform einer erfindungsgemäßen Einrichtung;

Fig. 8  ebenfalls schematisch in Draufsicht ein
        weiteres Ausführungsbeispiel einer erfin-
        dungsgemäßen Einrichtung.

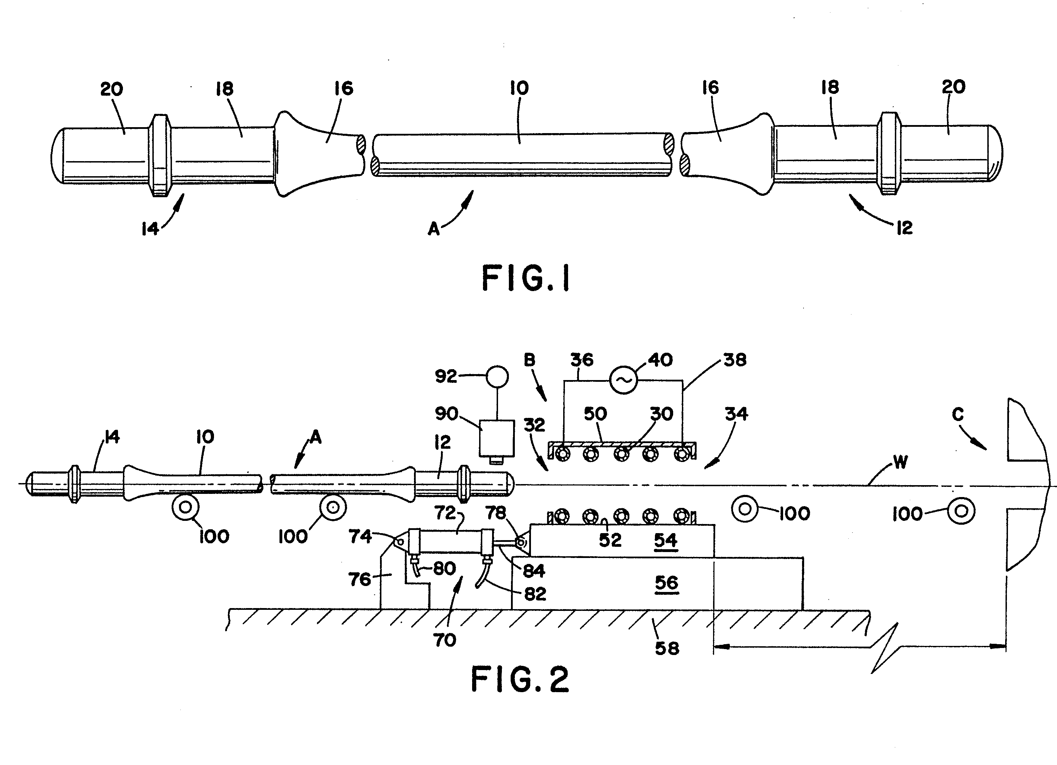

Fig. 1 zeigt ein längliches Werkstück A, welches auf ganzer Länge gleichmäßig erwärmt werden soll. Das Werkstück
A besteht aus einer Pumpenstange aus Stahl oder einem anderen Eisen-Werkstoff, die einen sich über ihre Hauptlänge
erstreckenden mittleren Längenabschnitt 10 und demgegenüber verdickte Stangenenden 12 und 14 aufweist. Der mittlere Längenabschnitt 10 kann einen kreisförmigen, sechseckigen Querschnitt oder einen sonstigen Querschnitt haben. Er weist auf ganzer Länge eine gleichmäßige, konstante Querschnittsgröße auf. Die endseitigen verdickten
Längenbereiche 12 und 14 sind im wesentlichen von gleicher Ausbildung; sie umfassen einen Wulst 16, einen als
Schlüsselvierkant ausgebildeten oder mit Abflachungen versehenen Abschnitt 18 und ein als Muffe oder Zapfen ausgebildetes Endstück 20. Bei der Ausführungsform nach Fig. 1
bestehen diese Endstücke 20 jeweils aus einem Zapfen, der
in einer letzten Bearbeitungsstufe mit einem Gewinde versehen wird, so daß die Stange an beiden Enden jeweils einen Gewindezapfen aufweist, mit der sie in die endseitige
Gewindemuffe einer anderen Stange eingeschraubt werden
kann. Es ist daher möglich, mehrere Pumpenstangen A durch
endseitige mechanische Kupplung zu einem Pumpengestänge
der gewünschten Länge zu verbinden.

Im allgemeinen liegt die Querschnittsabmessung des mittleren Längenabschnitts 10 der Pumpenstange im Bereich zwischen 12,5 mm und 28,5 mm, während die größten Querschnittsabmessungen der verdickten Längenabschnitte 12 und
14 normalerweise zwischen 25,4 und 57,2 mm liegen. Die Gesamtlänge der Stange beträgt angenähert 760 bis 915 cm, wobei die Länge der verdickten Abschnitte 12 und 14 verhältnismäßig klein ist und im allgemeinen nur mehrere Zentimeter beträgt. Neben der in Fig. 1 gezeigten Pumpenstange sind auch hiervon abweichende Pumpenstangen gebräuchlich. Beispielsweise weisen einige Pumpenstangen an ihrem
einen Ende einen Gewindezapfen und an ihrem anderen Ende
eine mit Innengewinde versehene Gewindemuffe auf, so daß
sich gleichartige Stangen endseitig durch Verschrauben
verbinden lassen. Das erfindungsgemäße Verfahren ist auch
bei diesen und anderen Ausführungen der Stangen ohne weiteres verwendbar.

Bei der Herstellung und Bearbeitung der Pumpenstangen müssen diese auf eine gleichmäßige Temperatur erwärmt werden,
um sie mit einer Farb- oder Kunststoffbeschichtung versehen zu können. Diese Erwärmung der Pumpenstangen erfolgt
mit Hilfe der in Fig. 2 dargestellten Einrichtung und nach
der im Zusammenhang mit den Fig. 2 bis 6 beschriebenen
Verfahrensweise.

Die dargestellte Einrichtung B zum induktivem Erwärmen der
Werkstücke A weist einen mehrwindigen Induktor 30 auf, der
aus einer zylindrischen Kupferspule besteht, die einen im
wesentlichen kreisförmigen Querschnitt hat. Die einzelnen
im Seitenabstand zueinander angeordneten Windungen der
Spule sind hohl, so daß ein durchgehender Innenkanal gebildet wird, der im Betrieb von einem Kühlmittel durchflossen wird. Die Kühlmittelzuführung befindet sich in
Nähe der Einrichtung B; sie ist von bekannter Ausbildung
und daher in der Zeichnung nicht dargestellt.

Der Induktor 30 ist im wesentlichen koaxial zu einer linearen Arbeitsstrecke W angeordnet und weist ein Eingangsende 32 und ein Ausgangsende 34 auf. Der Abstand zwischen
den Enden 32 und 34 des Induktors 30 ist vorzugsweise etwa
gleich oder geringfügig größer als die Länge der einzelnen
dickeren Längenabschnitte 12 und 14. Die Spule ist über elektrische Anschlußleitungen 36 und 38 mit einer Stromquelle 40 verbunden. Als Stromquelle können die in unterschiedlichen Ausführungen bekannten Wechselstromquellen
Verwendung finden, wie sie für das indiktive Erwärmen von
Werkstücken gebräuchlich sind. Die Frequenz und die Leistung der Stromquelle werden selbstverständlich der gewünschten Erwärmungsfunktion angepaßt. Die Anschlußleitungen 36 und 38 sind flexibel, so daß sie die Bewegung
des Induktors 30 entlang der Arbeitsstrecke W während der
Erwärmung der Pumpenstange A zumindest auf einem Teil ihrer Länge nicht behindern.

Der Induktor 30 ist zweckmäßig in einem endseitig offenen
Gehäuse 50 angeordnet. Er ist zusammen mit dem Gehäuse auf
der Oberseite 52 eines Induktorträgers 54 gelagert, der
nach Art eines Schlittens oder Laufwagens od.dgl. ausgebildet ist. Der Induktorträger 54 ist auf einem Rahmen
oder Untergestell 56 beweglich gelagert. Der Rahmen bzw.
das Untergestell 56 ist seinerseits auf einer Basis 58,
z.B. dem Boden od.dgl. befestigt. Der Induktorträger 54
ist auf dem Untergestell 56 so angeordnet, daß sich der
Induktor 30 in koaxialer Lage zu der Arbeitsstrecke W befindet und in Richtung der Arbeitsstrecke beweglich ist.
Bei der Anordnung nach Fig. 2 ist der Induktorträger 54
an dem Untergestell 56 gleitend geführt. Es versteht sich,
daß der Induktorträger 54 auch in Lagern, Gleitführungen
od.dgl. am Untergestell geführt werden könnte.

Für den Antrieb des Induktorträgers 54 ist eine Verschiebevorrichtung 70 am hinteren Ende des Induktorträgers vorgesehen. Die Verschiebevorrichtung besteht aus einem pneumatischen oder hydraulischen Zylinder 72, der mittels eines
am Zylinderboden angeordneten, z.B. gabelförmigen Gelenkanschlusses 74 an einer feststehenden Konsole 76 od.dgl.
angeschlossen ist. Das Kolbenstangenende des Zylinders 72
ist mit einem Gelenkanschluß 78 mit dem Induktorträger 54
verbunden. Zur wahlweisen Druckbeaufschlagung der zu beiden Seiten des Kolbens befindlichen Druckräume des Zylinders 72 sind diese über Druckmittelleitungen 80 und 82 an einer (nicht dargestellten) Druckmittelquelle angeschlossen, so daß die mit dem Induktorträger 54 verbundene Kolbenstange 84 des Zylinders 72 wahlweise ausgefahren oder eingefahren werden kann. Vorzugsweise ist die Anordnung so getroffen, daß sich die Geschwindigkeit, mit der das Druckmittel über die Leitungen 80, 82 aus dem jeweiligen Zylinderraum abströmt, einstellen läßt, so daß die Aus- und Einschubgeschwindigkeit der Kolbenstange 84 gesteuert werden kann.

Anstelle des vorstehend beschriebenen Zylinderantriebs können für den Antrieb des Induktorträgers 54 aber auch andere Antriebsvorrichtungen, z.B. Kettenantriebe, Spindelantriebe, Motorantriebe u.dgl. verwendet werden.

In Nähe der Arbeitsstrecke W ist eine Tastvorrichtung 90 vorgesehen, die einen Endschalter, einen Annäherungsschalter, einen Mikroschalter od.dgl. aufweisen kann. Die Tastvorrichtung 90 befindet sich etwa im Abstand von 61 cm vor dem Induktor 30, obwohl hier auch andere Anordnungen der Tastvorrichtung vorgesehen werden könnten. Die Tastvorrichtung 90 tastet die sich über die Arbeitsstrecke W bewegenden Werkstücke A auf ihre dickeren Längenabschnitte 12, 14 hin ab und steuert den Verschiebeantrieb 70 des Induktorträgers 54. Vorzugsweise ist eine Zeitverzögerungsvorrichtung 92 vorgesehen, die die Aufgabe hat, den Verschiebeantrieb 70 erst nach einer vorbestimmten, einstellbaren Zeitspanne nach der Aktivierung der Tastvorrichtung 90 einzuschalten. Während dieser Einschaltverzögerung haben die abgetasteten Stangenverdickungen 12, 14 Gelegenheit, sich von der Tastposition der Tastvorrichtung 90 bis in den Induktor 30 und in magnetische Kopplung mit diesem zu bewegen.

Die dargestellte Einrichtung weist schließlich eine Trag-und Transportvorrichtung für den Transport der Werkstücke
A entlang der Arbeitsstrecke W auf. Auch diese Vorrichtung
kann von unterschiedlicher Ausführung sein. Bei dem in
Fig. 2 gezeigten Ausführungsbeispiel besteht sie aus Transportrollen 100, die in einer solchen Anzahl und in einem
solchen Rollenabstand zueinander angeordnet sind, daß sie
die langgestreckten Werkstücke A praktisch auf ihrer gesamten Länge unterstützen. Die Transportrollen 100 weisen
einen (nicht dargestellten) Rollenantrieb auf, so daß die
Werkstücke A von den Rollen mit einer vorbestimmten Transportgeschwindigkeit entlang der Arbeitsstrecke W befördert
werden können.

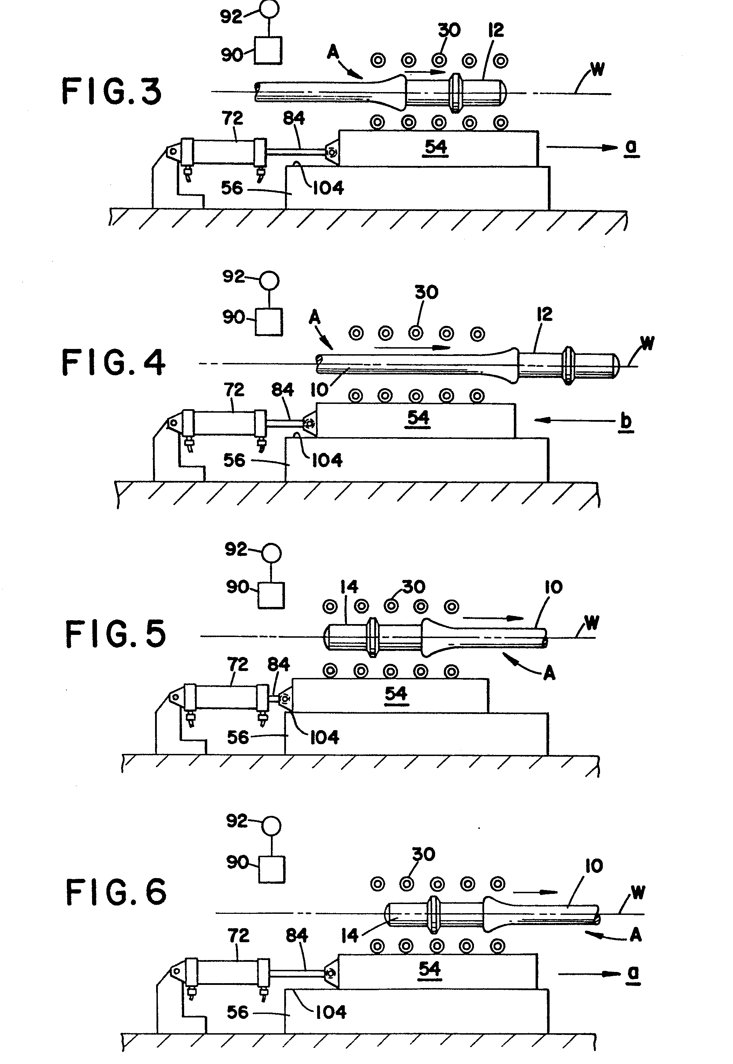

Im folgenden wird im Zusammenhang mit den Fig. 2 bis 6 die
Arbeitsweise der beschriebenen Einrichtung beim Erwärmen
eines Werkstücks A erläutert. Gemäß Fig. 2 wird das Werkstück A auf der Arbeitsstrecke W mit der vorbestimmten
Transportgeschwindigkeit in seiner Längsrichtung der Einrichtung B zugeführt. Sobald der am vorderen Ende des Werkstücks befindliche verdickte Längenabschnitt 12 sich der
Tastvorrichtung 90 nähert, wird diese aktiviert mit der
Folge, daß nach einer vorbestimmten Zeitverzögerung der
Verschiebeantrieb 70 eingeschaltet wird. Während dieser
Zeitverzögerung bewegt sich das Werkstück A kontinuierlich
auf der Arbeitsstrecke W weiter bis in den Induktor 30 und
damit in die magnetische Kopplung mit dem Induktor. Der
Induktor wird von der Stromquelle 40 mit einem vorbestimmten Strom beaufschlagt, der auf die Erwärmung des dünneren
und längeren Mittelabschnitts 10 des Werkstücks A abgestimmt ist. Da der Längenabschnitt 12 des Werkstücks A einen größeren Querschnitt hat als der mittlere Längenabschnitt 10, ist es zur Erzielung einer gleichmäßigen Erwärmung des Werkstücks auf ganzer Länge erforderlich, daß
bei der Erwärmung des dickeren Längenabschnitts 12 mit einer größeren effektiven Erwärmungszeit gearbeitet wird.
Nach dem Einlaufen des vorderen dickeren Längenabschnitts
12 in den Induktor 30 wird, wie erwähnt, der Verschiebeantrieb 72 eingeschaltet, so daß der Induktorträger 54 mit
dem Induktor 30 in Transportrichtung des Werkstücks A und
etwa mit derselben Geschwindigkeit wie das Werkstück A vorgeschoben wird. Diese Situation ist in Fig. 3 gezeigt. Der
Induktorträger 54 bewegt sich von seiner Normal- oder Ausgangsposition 104 in Pfeilrichtung a, wobei die Kolbenstange 84 des Zylinders 72 ausgefahren wird. Diese gleichsinnige Mitlaufbewegung des Induktorträgers 54 nebst Induktor 30 vollzieht sich über eine vorbestimmte Zeitspanne
hinweg, bis der dickere Längenabschnitt 12 innerhalb der
vorgegebenen oberen und unteren Toleranzgrenzen auf die
Solltemperatur aufgeheizt worden ist.

Nach der vorgenannten Zeitspanne für das Aufheizen des
dickeren Längenabschnitts 12, wird der Zylinder 72 in Einschubrichtung umgesteuert, so daß er unter Einschub seiner
Kolbenstange 84 den Induktorträger 54 mit dem Induktor 30
in Gegenrichtung b in die Ausgangsposition 104 zurückzieht.
Diese Situation ist in Fig. 4 gezeigt. Bei der Rückstellbewegung des Induktorträgers 54 bewegt sich das Werkstück
A mit der vorgegebenen kontinuierlichen Transportgeschwindigkeit weiter entlang der Arbeitsstrecke W, so daß nun
der mittlere längere und dünnere Längenabschnitt 10 den
Induktor 30 durchläuft und auf die Solltemperatur erwärmt
wird. Aufgrund der verhältnismäßig großen Länge des Längenabschnitts 10, die z.B. in der Größenordnung von etwa 760
cm liegt, steht für die Rückstellbewegung des Induktortragers 54 in die Ausgangsposition 104 eine ausreichend große
Zeitspanne zur Verfügung. Es empfiehlt sich, den Induktorträger 54 mit dem Induktor 30 mit verhältnismäßig geringer
Geschwindigkeit in die Ausgangsposition 104 zurückzufahren,
so daß der Längenabschnitt 10 des Werkstücks A gleichmäßig
erwärmt wird.

Fig. 5 zeigt den am hinteren Ende des Werkstücks A liegenden verdickten Längenabschnitt 14, nachdem er beim Vorbeigang die Tastvorrichtung 90 aktiviert hat und anschließend in den Induktor 30 hineingelaufen ist. Dieser Vorgang ist derselbe wie zuvor im Zusammenhang mit dem vorderen dickeren Längenbereich 12 beschrieben. Der Antriebszylinder 72 wird wiederum eingeschaltet, so daß er den Induktorträger 54 mit dem Induktor 30 wieder von der Ausgangsposition 104 gleichsinnig zu der Transportrichtung des Werkstücks A verschiebt. Dieser Vorgang ist in Fig. 1 durch den Pfeil a angegeben. Am Ende einer vorbestimmten Zeitspanne, die im wesentlichen der Zeitspanne der Erwärmungsbehandlung des vorderen Längenabschnitts 12 des Werkstücks A entspricht, wird der Antriebszylinder 72 wieder in Einschubrichtung umgesteuert, so daß er den Induktorträger 54 mit dem Induktor 30 in die Ausgangsposition 104 zurückstellt. Da bei dieser Rückstellbewegung der Induktor 30 keine Erwärmungsfunktion hat, sobald der hintere dickere Längenabschnitt 14 den Induktor verlassen hat, wird der Induktorträger 54 hier zweckmäßig mit einer höheren Rückstellgeschwindigkeit, also im Schnellgang, zurückgefahren, so daß die Einrichtung sofort wieder betriebsbereit ist. Auf diese Weise ist es möglich, in kurzen Abständen aufeinanderfolgende Werkstücke A in der beschriebenen Weise aufzuheizen.

Das erwärmte Werkstück A durchläuft hinter der Einrichtung B eine Beschichtungseinrichtung C, in der es mit der Farb- oder Kunststoffbeschichtung versehen wird. Diese Einrichtung C besteht im allgemeinen aus einer elektrostatischen Sprühkammer, die in kurzem Abstand hinter der Erwärmungseinrichtung B angeordnet ist. Anstelle einer Sprühkammer können für die Werkstückbeschichtung aber auch andere Einrichtungen verwendet werden. Auch läßt sich die erfindungsgemäße Einrichtung und das erfindungsgemäße Verfahren auch zu anderen Zwecken und in Verbindung mit anderen Einrichtungen verwenden.

Mit Hilfe des vorstehend beschriebenen Verfahrens ist es möglich, Pumpenstangen oder sonstige Werkstücke auf ganzer Länge gleichmäßig zu erwärmen. In dem beschriebenen Anwendungsfall liegt die Aufheiztemperatur über 205°C. Dabei lassen sich die langen Werkstücke A innerhalb der zulässigen Temperaturtoleranzen von ± 14°C erwärmen.

In einem praktischen Anwendungsfall ergab sich die Forderung, Pumpenstangen A bei einer Transportgeschwindigkeit auf der Arbeitsstrecke W von etwa 760 cm je Minute unter Verwendung eines mehrwindigen Induktors 30 mit einer Länge von etwa 152,5 mm auf eine Temperatur von etwa 205°C gleichmäßig aufzuheizen. Der mittlere Längenabschnitt 10 wies dabei eine Querschnittsabmessung von 19 mm bei sechseckigem Querschnitt auf. Um zufriedenstellende Ergebnisse innerhalb der zulässigen Toleranzgrenzen zu erzielen, war es erforderlich, die dickeren Längenabschnitte 12 und 14 jeweils über eine Dauer von etwa 3 bis 3,5 Sekunden aufzuheizen. Da bei der angegebenen Werkstück-Transportgeschwindigkeit die dickeren Längenabschnitte 12 und 14 jeweils in etwa 2 Sekunden den Induktor durchlaufen, mußte der Induktor 30 bzw. der Induktorträger 54 von seiner Ausgangsstellung 104 aus über eine Zeitspanne von etwa 1,5 Sekunden vorgeschoben werden. Bei einer Vorschubgeschwindigkeit des Induktorträgers 54, die der Transportgeschwindigkeit der Stange A, also 760 cm/min. entspricht, ergibt sich hierbei ein Hub des Induktorträgers 54 in Transportrichtung des Werkstücks über eine Strecke von etwa 190,5 mm. Es versteht sich, daß diese Parameter bei der Aufheizung von Pumpenstangen anderer Abmessungen oder bei der Erwärmung anderer Werkstücke sowie bei Änderungen der Werkstück-Transportgeschwindigkeit und der Charakteristik des jeweiligen Induktors usw. entsprechende Änderungen erfahren.

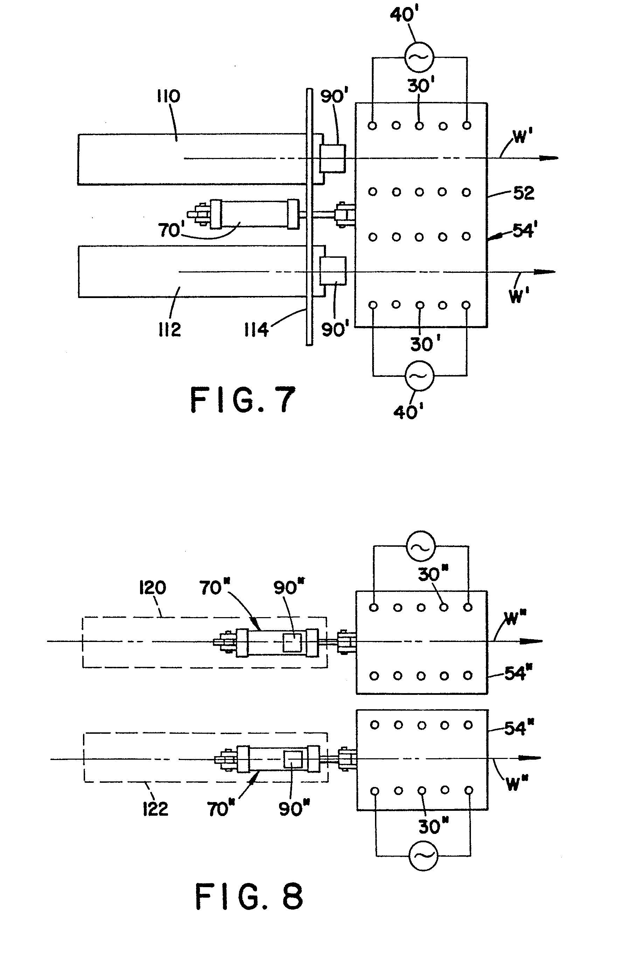

Fig. 7 zeigt ein weiteres Ausführungsbeispiel einer erfindungsgemäßen Einrichtung in Draufsicht, wobei übereinstimmende Teile mit denselben Bezugszeichen, jedoch mit einem Index-' versehen sind. Bei dieser Ausführungsform sind auf einem gemeinsamen Induktorträger 54' zwei mehrwindige Induktoren 30' in Parallellage zueinander angeordnet. Entsprechend sind hier zwei parallele, durch die Induktoren 30' hindurchführende Arbeitsstrecken W' vorgesehen. Die beiden Induktoren 30' werden jeweils von einer eigenen Stromquelle 40' versorgt. Statt dessen könnten die Induktorspulen aber auch bei entsprechender elektrischer Verknüpfung von einer einzigen Stromquelle beaufschlagt werden. Die Einrichtung weist zwei Werkstück-Trag- und Transportvorrichtungen 110 und 112 auf, die jeweils in Axialrichtung zu dem zugeordneten Induktor 30' ausgerichtet sind. Ferner sind hier zwei Tastvorrichtungen 90' in Nähe der beiden Induktoren 30' angeordnet, welche die Stangenverdickungen beim Zulauf der Werkstücke über die beiden Arbeitsstrecken W' abtasten. Die aus dem Zylinderantrieb oder einem sonstigen Antrieb bestehende Verschiebevorrichtung 70' verschiebt den gemeinsamen Induktorträger 54' in Vorwärtsrichtung, d.h. gleichsinnig zu der Transportrichtung der Werkstücke und in Rückstellrichtung bis in die Ausgangsposition, wie dies im Zusammenhang mit dem Ausführungsbeispiel nach den Fig. 2 bis 6 erläutert wurde. Mit der Einrichtung nach Fig. 7 ist es somit möglich, gleichzeitig zwei Pumpenstangen oder sonstige Werkstücke in der beschriebenen Verfahrensweise gleichzeitig aufzuheizen. Damit die beiden Werkstücke gleichzeitig ihren Induktoren 30' während des Aufheizzyklus zulaufen, ist in unmittelbarer Nähe der beiden Tastvorrichtungen 90' ein beweglicher Anschlag 114 od.dgl. vorgesehen, der sich quer über die beiden Arbeitsstrecken W' erstreckt. Wenn beide zulaufenden Werkstücke sich am Anschlag 114 befinden, wird dieser angehoben oder in anderer Weise aus dem Transportweg der Werkstücke entfernt, so daß die Werkstücke nun in die beiden Induktoren 30' hineinlaufen und diese in der beschriebenen Weise durchlaufen. Die Betätigung des Anschlags 114 erfolgt zweckmäßig auf automatischem Wege.

In Fig. 8 ist eine weitere Ausführungsform einer erfindungsgemäßen Einrichtung dargestellt. Übereinstimmende

0072901

Vorrichtungsteile tragen dieselben Bezugsziffern, jedoch
mit einem Doppel-Indexstrich. Bei dieser Einrichtung sind
zwei parallel zueinander angeordnete Induktoren 30" jeweils auf einem eigenen Induktorträger 54" angeordnet. Jeder Induktorträger 54" weist eine eigene Verschiebevorrichtung 70" und eine eigene (nicht dargestellte) Tastvorrichtung in Nähe des Eingangsendes des betreffenden Induktors
30" auf. Die Zuführung der Werkstücke erfolgt über die beiden Werkstück-Trag- und Transportvorrichtungen 120 und 122
auf den beiden parallelen Arbeitsstrecken W". Bei dieser
Einrichtung können die Werkstücke A auf den beiden Arbeitsstrecken W" unabhängig voneinander in der beschriebenen
Weise aufgeheizt werden. Es ist also hier nicht erforderlich, die beiden Werkstücke jeweils gleichzeitig ihren Induktoren zuzuführen.

Die Erfindung ist auf die vorstehend beschriebenen bevorzugten Ausführungsbeispiele nicht beschränkt. Im Rahmen
der Erfindung lassen sich Änderungen in verschiedener Hinsicht vornehmen, ohne die durch die Ansprüche abgesteckten
Grenzen zu überschreiten.

P a t e n t a n s p r ü c h e :

1. Verfahren zum gleichmäßigen induktiven Erwärmen eines
länglichen Werkstücks, wie insbesondere einer Pumpenstange u.dgl., welches einen sich vorzugsweise über
den Hauptteil seiner Länge erstreckenden dünneren Längenabschnitt mit im wesentlichen gleichmäßigem Querschnitt und mindestens einen Längenabschnitt mit demgegenüber dickerem Querschnitt aufweist, wobei das
Werkstück und ein mit ihm induktiv gekoppelter, das
Werkstück im jeweiligen Kopplungsbereich umschließender mehrwindiger Induktor über eine in Werkstück-Längsrichtung verlaufende Arbeitsstrecke mit vorbestimmter
Geschwindigkeit relativ zueinander bewegt werden, dadurch gekennzeichnet, daß die Relativgeschwindigkeit
zwischen dem Werkstück (A) und dem Induktor (30, 30',
30") bei magnetischer Kopplung desselben mit dem dickeren Längenabschnitt (12, 14) des Werkstücks gegenüber
der Relativgeschwindigkeit, die bei magnetischer Kopplung des Induktors (30, 30', 30") mit dem dünneren
Längenabschnitt (10) des Werkstücks vorliegt, so weit
vermindert wird, daß der dickere Längenabschnitt (12,
14) bei erhöhter effektiver Erwärmungsdauer im wesentlichen auf dieselbe Temperatur erwärmt wird wie der
dünnere Längenabschnitt (10) des Werkstücks (A).

2. Verfahren nach Anspruch 1, dadurch gekennzeichnet, daß
der Zeitintervall während der verminderten Relativgeschwindigkeit gesteuert wird.

3. Verfahren nach Anspruch 1 oder 2, dadurch gekennzeichnet, daß während der induktiven Kopplung des Induktors
(30, 30', 30") mit dem dickeren Längenabschnitt (12,
14) des Werkstücks (A) die Relativgeschwindigkeit zwi-

schen Werkstück und Induktor für einen vorbestimmten
Zeitintervall zumindest angenähert aufgehoben wird.

4. Verfahren nach einem der Ansprüche 1 bis 3, dadurch
gekennzeichnet, daß während der Erwärmung des dünneren Längenabschnitts (10) das Werkstück (A) mit vorbestimmter Geschwindigkeit über die Arbeitsstrecke
(W, W', W") zu dem Induktor (30, 30', 30") und durch
diesen hindurch bewegt wird.

5. Verfahren nach Anspruch 4, dadurch gekennzeichnet, daß
während der magnetischen Kopplung des Induktors (30,
30', 30") mit dem dickeren Längenabschnitt (12, 14)
des Werkstücks (A) der Induktor gleichsinnig zu dem
Werkstück über die Arbeitsstrecke (W, W', W") bewegt
wird.

6. Einrichtung nach Anspruch 5, dadurch gekennzeichnet,
daß nach einem vorgegebenen Zeitintervall der Induktor
(30, 30', 30") in die Ausgangsstellung (104) zurückbewegt wird.

7. Verfahren nach Anspruch 5 oder 6, dadurch gekennzeichnet, daß die Rückstellbewegung des Induktors (30, 30',
30") in die Ausgangsstellung (104) mit einer Geschwindigkeit durchgeführt wird, die von der Geschwindigkeit
abweicht, mit der der Induktor gleichsinnig mit dem
Werkstück (A) bewegt wird.

8. Verfahren nach einem oder mehreren der Ansprüche 1 bis
7, dadurch gekennzeichnet, daß das Werkstück (A) mit
einer vorbestimmten kontinierlichen Geschwindigkeit
über die Arbeitsstrecke (W, w', W") zu dem Induktor
(30, 30', 30") und durch diesen hindurch bewegt wird,
und daß bei induktiver Kopplung des Induktors mit dem
dickeren Längenabschnitt (12, 14) des Werkstücks (A)
der Induktor von einer Ausgangsposition (104) aus gleichsinnig zu dem Werkstück bewegt und anschließend
in die Ausgangsposition zurückbewegt wird.

9.  Verfahren nach einem der Ansprüche 1 bis 8, dadurch
gekennzeichnet, daß gleichzeitig mehrere gleichartige
Werkstücke (A) mit Hilfe mehrerer Induktoren (30', 30")
in der genannten Weise erwärmt werden.

10.  Verfahren nach Anspruch 8 oder 9, dadurch gekennzeichnet, daß die Vorschubgeschwindigkeit, mit der das oder
die Werkstücke (A) dem Induktor (30, 30', 30") zugeführt und durch diesen hindurchgeführt werden, und die
Mitführgeschwindigkeit, mit der der Induktor gleichsinnig zu dem bzw. den Werkstücken bewegt wird, etwa
gleich groß eingestellt werden.

11.  Verfahren nach einem der Ansprüche 8 bis 10, dadurch
gekennzeichnet, daß der dickere Längenabschnitt (12,
14) des Werkstücks (A) vor dem Einlauf in den Induktor
(30, 30', 30") abgetastet wird, und daß nach einer vorbestimmten Zeitverzögerung nach Abtastung dieses Längenabschnitts der Mitlauf des Induktors ausgelöst wird.

12.  Verfahren nach einem der Ansprüche 1 bis 11, dadurch
gekennzeichnet, daß bei einem Werkstück (A), welches
an seinen Endbereichen jeweils einen dickeren Längenabschnitt (12, 14) aufweist, der Induktor (30, 30',
30") bei der Erwärmung dieser dickeren Längenabschnitte jeweils gleichsinnig mit dem Werkstück bewegt und
anschließend in die Ausgangslage (104) zurückbewegt
wird.

13.  Verfahren nach Anspruch 12, dadurch gekennzeichnet,
daß die Rückstellbewegung des Induktors (30, 30', 30")
nach Erwärmen des in Werkstück-Vorschubrichtung hintenliegenden dickeren Längenabschnitts (14) mit größerer Geschwindigkeit durchgeführt wird, als die Rückstellbewegung des Induktors nach Erwärmen des in Werkstück-Transportrichtung davorliegenden dickeren Längenabschnitts (12).

14. Verfahren nach einem der Ansprüche 1 bis 13, dadurch
gekennzeichnet, daß das Werkstück (A) mit kontinierlicher Geschwindigkeit über die Arbeitsstrecke (W, W',
W") bewegt und der Induktor (30, 30', 30") bei induktiver Kopplung mit den im Querschnitt unterschiedlichen Längenbereichen (10, 12, 14) des Werkstücks (A)
mit derselben vorgegebenen elektrischen Leistung betrieben wird.

15. Einrichtung zur Durchführung des Verfahrens nach einem
oder mehreren der Ansprüche 1 bis 14, mit einer Induktorvorrichtung, die mindestens eine mehrwindige Induktorspule aufweist, durch die das Werkstück hindurchführbar ist, und mit einer der Induktorvorrichtung zugeordneten Stromquelle, dadurch gekennzeichnet, daß
eine die Werkstücke (A) durch die Induktorspule (30,
30', 30") hindurchführende und über die Arbeitsstrecke
(W, W', W") befördernde Werkstück-Transportvorrichtung
(100), ferner eine die Induktorvorrichtung in Richtung
der Arbeitsstrecke bewegende Verschiebevorrichtung (70,
70', 70") und eine Tastvorrichtung (90, 90', 90") vorgesehen sind, die ein die Verschiebevorrichtung steuerndes Signal liefert, wenn ein dickerer Längenabschnitt (12, 14) des Werkstücks eine Tastposition in
Nähe des Eingangsbereichs der Induktorvorrichtung erreicht.

16. Einrichtung nach Anspruch 15, dadurch gekennzeichnet,
daß eine die Verschiebevorrichtung (70, 70', 70") bei
Signalgabe der Tastvorrichtung (90, 90', 90") zeitverzögert einschaltende Zeitverzögerungsvorrichtung (92)
vorgesehen ist.

0072901

17. Einrichtung nach Anspruch 15 oder 16, dadurch gekennzeichnet, daß die, vorzugsweise aus einem Zylinderantrieb bestehende Verschiebevorrichtung (70, 70', 70") auf unterschiedliche Vorschub- und Rückstellgeschwindigkeiten des Induktors einstellbar ist, vorzugsweise mit einer Langsam- und Schnellrückstellung des Induktors versehen ist.

18. Einrichtung nach einem der Ansprüche 15 bis 18, dadurch gekennzeichnet, daß mindestens ein Induktor (30, 30', 30") an einem nach Art eines Schlittens oder Laufwagens ausgebildeten Induktorträger (54, 54', 54") angeordnet ist, der mittels der Verschiebevorrichtung (70, 70', 70") in Transportrichtung des Werkstücks (A) und in Gegenrichtung beweglich ist.

19. Einrichtung nach Anspruch 18, dadurch gekennzeichnet, daß mehrere Induktoren (30') in Parallellage zueinander an dem gemeinsamen Induktorträger (54') angeordnet sind.

FIG.1

FIG.2

0072901

**FIG. 3**

**FIG. 4**

**FIG. 5**

**FIG. 6**

FIG. 7

FIG. 8

0072901

Europäisches
Patentamt

**EUROPÄISCHER RECHERCHENBERICHT**

Nummer der Anmeldung

EP 82 10 5569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A- 815 003 (F.S. DENNEEN et al.) <br> * Zusammenfassung 1,4,8,11,12; Figuren 3-7; Seiten 2,4-6 * | 1,2 | C 21 D 1/42 <br> H 05 B 6/02 // <br> C 21 D 9/00 |
| X | US-A-3 743 808 (R.J. KASPER) <br> * Insgesamt * | 1,2 | |
| Y | FR-A-2 360 674 (NIPPON KOKAN) <br><br> * Ansprüche 1,2,6; Figur 6 * | 1,4-8, 15-18 | |
| Y | DE-A-2 801 661 (AEG) <br><br> * Insgesamt * | 1,3-8, 15-18 | |
| Y | DE-A-1 533 955 (AEG) <br> * Ansprüche 1,4-6 * | 1-3 | RECHERCHIERTE SACHGEBIETE (Int. Cl. ³) |
| A | DE-A-1 508 430 (OHIO CRANKSHAFT) | | C 21 D <br> H 05 B |
| A | FR-A-1 557 249 (U.S. STEEL) <br><br> & DE - A - 1 608 002 | | |
| A | US-A-2 490 104 (H.A. STRICKLAND) | | |

Der vorliegende Recherchenbericht wurde für alle Patentansprüche erstellt

| Recherchenort <br> DEN HAAG | Abschlußdatum der Recherche <br> 22-11-1982 | Prüfer <br> MOLLET G.H.J. |
|---|---|---|